# EUROPEAN PATENT APPLICATION

(11) **EP 3 569 526 A1**
(43) Date of publication of application: **20.11.2019**
(21) Application number: 18172695.1
(22) Date of filing: 16.05.2018
(51) Int. Cl.: B65G 21/10, B65G 67/08

(54) **A CONVEYOR ASSEMBLY COMPRISING A CONNECTOR UNIT**

(71) Applicant: BBHS A/S, 2640 Hedehusene (DK)
(72) Inventor: SVENNINGSEN, Ulrik, 2500 Valby (DK); GRIZ, Krisztián, 2630 Taastrup (DK)
(74) Representative: Inspicos P/S

(57) **Abstract**

A conveyor assembly comprising an item conveyor and a connector unit for loading of luggage or parcel items to the item conveyor or unloading of luggage or parcel items from the item conveyor is disclosed. The connector unit defines a connector unit conveyor surface. The conveyor assembly further comprises, a rotation element for automated rotation of the connector unit relative to the item conveyor around an axis of rotation extending transversely to the connector unit conveyor surface, a tilting element for automated tilting of the connector unit relative to the item conveyor, at least one first actuator assembly connected to the connector unit and configured to at least effect automated rotation of the connector unit relative to the item conveyor around the axis of rotation, and a control unit for controlling the first actuator assembly.

## Description

### Technical field

The present invention relates to a conveyor assembly for handling of luggage or parcel items, for example at airports or parcel sorting and distribution facilities, the conveyor assembly comprising an item conveyor and a connector unit.

### Background of the invention

Various systems are known for transporting, sorting and storing various items and goods, including luggage and parcel items. Such systems are usually tailored to meet specific requirements set by the nature, size and weight of the items, as well as requirements regarding sorting, transport distances and speed of transportation.

One specific field of interest of the present application is the field of transportation and storage of luggage or parcel items in airports. In most airports, checked-in luggage is usually conveyed from a plurality of check-in counters to a central luggage conveying and/or sorting apparatus, referred to herein also as a principal conveyor, at which each luggage item is sorted according to its destination. Such conveying and/or sorting apparatus normally comprises a plurality of discharge units, in each of which luggage items destined for a particular aircraft are accumulated. The luggage items are then manually loaded onto carts or trolleys, by means of which the items are transported to the aircraft. The carts or trolleys may be self-propelled, or they may be attachable to a propelling unit (or tractor), which may be arranged to pull a plurality of trolleys or carts coupled together to form a train. Likewise parcels being sorted are typically discharged from a sorting conveyor into a plurality of collecting stations, each of which is designated for a particular destination. From the collecting stations, the parcels are transported in trollies, carts, containers, cages or bins to an aircraft.

At various points in the process of handling the luggage and parcel items, a need exist for loading luggage or parcel items to an item conveyor or unloading of luggage or parcel items from an item conveyor. This could, e.g., be if luggage or parcel items is moved between a conveying and/or sorting apparatus and carts or trolleys, or between an aircraft and carts or trolleys. Present techniques for such movement of luggage or parcel items may involve a considerate amount of manual labour and are commonly inefficient and/or inconvenient.

### Summary of the invention

On the above background it is an object of embodiments of the invention to provide a system, which expedites handling of luggage and parcels at airports, sorting facilities and similar facilities, notably in the sense of providing a conveyor assembly which improves loading luggage or parcel items to an item conveyor or unloading luggage or parcel items from an item conveyor. It is in particular an object of embodiments of the invention to provide a conveyor assembly that improves the efficiency and/or convenience of such processes.

In a first aspect, embodiments provide a conveyor assembly comprising an item conveyor and a connector unit for loading of luggage or parcel items to the item conveyor or unloading of luggage or parcel items from the item conveyor, the connector unit defining a connector unit conveyor surface, the conveyor assembly further comprising:
- a rotation element for automated rotation of the connector unit relative to the item conveyor around an axis of rotation extending transversely to the connector unit conveyor surface;
- a tilting element for automated tilting of the connector unit relative to the item conveyor;
- at least one first actuator assembly connected to the connector unit and configured to at least effect automated rotation of the connector unit relative to the item conveyor around the axis of rotation; and
- a control unit for controlling the first actuator assembly.

In a second aspect, embodiments provide a method for loading of luggage or parcel items to an item conveyor or unloading of luggage or parcel items from the item conveyor, the method comprising the steps of:
- providing a conveyor assembly comprising an item conveyor and a connector unit, the conveyor assembly further comprising:
   ∘ a rotation element for automated rotation of the connector unit relative to the item conveyor around an axis of rotation extending transversely to the connector unit conveyor surface;
   ∘ a tilting element for automated tilting of the connector unit relative to the item conveyor;
   ∘ at least one first actuator assembly connected to the connector unit and configured to at least effect automated rotation of the connector unit relative to the item conveyor around the axis of rotation; and
   ∘ a control unit for controlling the first actuator assembly
   and
- conveying luggage or parcel items to an item conveyor via the connector unit or conveying luggage or parcel items from the item conveyor via the connector unit.

In present context, the term "tilting" is to be understood as changing orientation in a vertical plane, such as, e.g., pivoting up or down. In present context, the term rotation is to be understood as rotation in a horizontal plane, such as, e.g., pivoting from side to side.

In embodiments, the connector unit comprises at least one conveyor element.

It will be appreciated that the ability of the connector unit to both tilt and rotate relative to the item conveyor may improve the efficiency of the conveyor assembly. More particularly, because the connector unit is able to both tilt and rotate relative to the item conveyor, the connector unit is able to reach a larger range of locations without having to move the item conveyor, than if the connector unit did not have such capabilities. If, e.g., luggage or parcel items are loaded from a cart or trolley having a plurality of shelves and/or rows onto the item conveyor, or vice versa, the connector unit may be able to reach a plurality of such shelves and/or rows by way of movement of the connector unit only. Rotation of the connector unit relative to the item conveyor is conveniently effectuated by the first actuator assembly enabling automated handing for optimised comfort and speed. Particularly, when loading a cart or a container, such as, e.g., a unit load device (ULD), the luggage or parcel items may have to be arranged in a specific order or manner. Without an automated conveyor assembly with at least one actuator causing automated rotation of the connector unit, a person would possibly have to reach for the designated location of each luggage or parcel item. Such repeated movements may be harmful for people and are avoidable thanks to the provisions of the automated rotation and tiling elements of the conveyor assembly as claimed.

The at least one first actuator assembly may comprise linear actuators and/or curved actuators. The connector unit and the item conveyor may be hinged directly to each other or may be attached to each other via combinations of hinges, spacer arms and/or the first actuator assembly. The linear actuators may, e.g., be hydraulic cylinders or electric rod actuators (cylinders).

The conveyor assembly may be operated in response to user input from a person (operator) adjacent the conveyor assembly for a local assessment of the loading procedure and requirements, or remotely by a person operating a remote control for increased convenience for the operator. The conveyor assembly may also be configured to be operated in accordance with an operation algorithm running on, e.g., a local computer or a centralised computer server. The conveyor assembly may comprise a plurality of sensors configured to give sensor output to an operator and/or an operation algorithm running on a local computer or centralised server. The operator and/or operation algorithm may then adjust its operation on the basis of the sensor output. For instance, a sensor may determine the weight of a luggage or parcel item on the connector unit or item conveyor, and then determine an end position of the item in the cart or container on the basis of the determined weight. The sensors may also be arranged upstream of the conveyor assembly and provide stored sensor output to the operator or operation algorithm in relation to the parcel or luggage item being handled by the conveyer assembly. The conveyor assembly may comprise at least one scanner for scanning a tag of the parcel or luggage item being handled by the conveyor assembly for identification of the item and possibly retrieval of stored information concerning the identified item.

In embodiments, the at least one first actuator assembly is configured to effect automated tilting of the connector unit relative to the item conveyor. With the at least one first actuator assembly effectuating automatic tilting of the connector unit, automated tilting is provided for convenient tilting of the connector unit. This enables further automation of the conveyor assembly with increased convenience and effectivity of the conveyor assembly as a result.

In embodiments, the first actuator assembly interconnects the item conveyor and the connector unit. In this case, the first actuator assembly may adjust the orientation of the connector unit relative to the item conveyor irrespective of the surroundings. Moreover, actuator assemblies previously also effectuated movement in relation to, and supporting on, ground. The first conveyor assembly according to present embodiments may be operated irrespective of the properties, e.g. softness, of the ground under the operating conveyor assembly.

In embodiments, the rotation element comprises at least two linear actuators. In this case, the linear actuators may operate collaboratively and possibly independent of any hinges or bars that may extend between the connector unit and item conveyor. Further, by having at least two linear actuators, if one linear actuator should fail, the other may still effectuate rotation of the connector unit relative to the item conveyor.

In embodiments, the linear actuators of the rotation element are attached to the item conveyor via joints allowing movement around a first axis oriented transverse to a conveying direction of the item conveyor, and around a second axis oriented perpendicular to the first axis. The resulting at least two degrees of freedom of the at least two linear actuators of the rotation element allows for both rotation and tilting of the linear actuators relative to the item conveyor. Accordingly, the at least two linear actuators of the rotation element are allowed to be rigidly attached to the connector unit for a particularly simple and robust configuration of the connector unit.

In embodiments, the tilting element comprises at least one linear actuator. This allows for a simple and robust configuration of the tilting element. In case the rotation element also comprises at least one linear actuator, both tilting and rotation of the connector unit relative to the item conveyor may be effectuated solely by linear actuators for reduced complexity of the conveyor assembly.

In embodiments, the connector unit is connected to the item conveyor solely through the first actuator assembly. In this case, the mobility of the connector unit relative to the item conveyor is increased with a resulting optimised reachability of the connector unit. Further, the structure of the conveyor assembly is allowed to be particularly simple, adding to the reliability of the conveyor assembly. Also, the amount of hinges comprised in the attachment of the connector unit may be minimized thereby increasing the reliability of the conveyor assembly.

In embodiments, the connector unit comprises:
- mutually displaceable first and second connector conveyor elements; and
- a supporting structure for supporting the first and second connector conveyor elements.

The mutually displaceable first and second connector conveyor elements may increase the versatility of the connector unit. The first or the second connector conveyor element may be displaced away from the other connector conveyor element and away from the item conveyor. This allows the connecting unit to be readily extended. Similarly, the first or second connector conveyor element may be retracted to shorten the connector unit.

In one embodiment, the mutually displaceable first and second connector conveyor elements are configured to be mutually displaceable within vertically displaced planes. In one embodiment, the vertically displaced planes are parallel. This allows for a compact yet versatile configuration of the connector unit.

In embodiments, the method comprises the further step of selectively mutually displacing the first and second connector conveyor elements on the basis of a conveying direction of the first and second connector conveyor elements.

The first and second connector conveyor elements may be controlled to selectively mutually displaced on the basis of a conveying direction of the first and second connector conveyor elements. Moreover, if the first connector conveyor element is, e.g., arranged above the second connector conveyor element, and they are conveying items away from the item conveyor, the first connector conveyor element may preferably be controlled to be arranged closest to the item conveyor, while the second connector conveyor element is preferentially controlled to be arranged furthest from the item conveyor. In this case, it is ensured that when the item is being conveyed from the first to the second connector conveyor element, the item is allowed to move down from the first to the second connector conveyor element by way of gravity.

In embodiments, the at least one first actuator assembly is attached to the supporting structure via a intermediate structure, the intermediate structure being attached to the supporting structure via joints allowing tilting of the supporting structure relative to the intermediate structure. By having the first actuator assembly attach to the supporting structure via the intermediate structure, the supporting structure may be allowed one or more degrees of freedom relative to the first actuator assembly while allowing the first actuator assembly to attach to the connector unit via rigid immobile points of attachment. In one embodiment, one end of each of the actuators of the first actuator assembly is integrally formed with the intermediate structure increasing the structural integrity of the conveyor assembly.

In embodiments, the item conveyor defines and end point, the end point being arranged at an extremity of the item conveyor where items are transferred between the item conveyor and the connector unit.

In embodiments, the supporting structure comprises a tilting supporting element allowing tilting of the first and second connector conveyor elements relative to the intermediate structure.

In embodiments, the method comprises the further step of selectively tilting the first and second connector conveyor elements relative to the intermediate structure on the basis of the conveying direction of the first and second connector conveyor elements.

The axis of tilting of the tilting supporting element is preferably offset from the axis of tilting of the tilting element. This allows the first and second connector conveyor elements to be tilted upwards or downwards to reach a location higher or lower than the end point of the item conveyor, while the tilting supporting element is independently tilting the first and/or second connector conveyor element up above the end point of the item conveyor, or down below the end point of the item conveyor. Accordingly, if the conveyor assembly is conveying items off of the item conveyor and on to the connector unit, the tilting supporting element is preferentially controlled to shift the closest one of the first or second connector conveyor elements down below the end point of the item conveyor and vice versa. This increases the reliability of the conveyor assembly.

In embodiments, the method comprises the further step of selectively tilting the connector unit relative to the item conveyor on the basis of the conveying direction of the first and second connector conveyor elements. In this case, if the conveying direction of the first and second connector conveyor elements changes, which leads to the first and second connector conveyor elements mutually displacing and/or the intermediate structure tilting relative to the supporting structure, the tilting element may compensate for a resulting change in reach by tilting the connector unit relative to the item conveyor. Moreover, present embodiments may ensure that the connector unit reaches the same height even though the first and second connector conveyor elements mutually displace and/or the supporting structure is tilted relative to the intermediate structure.

In embodiments, the tilting supporting structure comprises a second actuator assembly comprising at least one linear actuator attached to each of the intermediate structure and the supporting structure, the second actuator assembly allowing automatic tilting of the supporting structure relative to the intermediate structure.

In embodiments, the tilting element is configured to allow the connector unit to tilt at least 20 degrees relative to the item conveyor, preferably at least 30 degrees for increased versatility of the conveyor assembly.

In embodiments, the rotation element is configured to allow the connector unit to rotate at least 30 degrees relative to the item conveyor around the axis of rotation for increased versatility of the conveyor assembly.

In embodiments, the rotation element and/or the tiling element and/or at least one conveyor element are configured to be power-operated.

In embodiments, the rotation element and/or the tiling element and/or at least one conveyor element are configured to be remote-controlled.

### Brief description of the drawings

Embodiments of the invention will now be described in further described with reference to the accompanying drawings, in which:

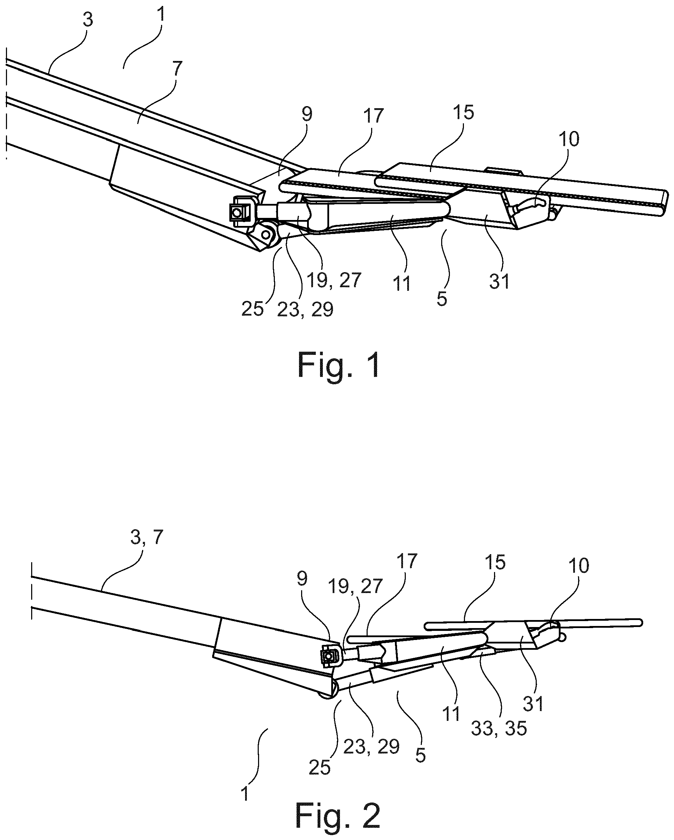

Figs. 1-20 illustrate embodiments of the invention in various configurations.

### Detailed description of the drawings

The embodiment of the conveyor assembly 1 of Fig. 1 comprises an item conveyor 3 and connector unit 5 for loading of luggage or parcel items to the item conveyor 3 or unloading of luggage or parcel items from the item conveyor 3. The item conveyor 3 comprises a main conveyor belt 7 for conveying items along either of its longitudinal directions. The end of the conveyor belt 7 defines the end point 9 of the item conveyor 3. The connector unit comprises an intermediate structure 11 providing rigidity to the connector unit 5.

At the end point 9 of the item conveyor 3, items are transferred between the item conveyor 3 and the connector unit 5. The conveyor assembly 1 is capable of both loading items from the connector unit 5 to the item conveyor 3 and unloading items from the item conveyor 3 to the connector unit 5. In the embodiment of Fig. 1, the connector unit 5 comprises mutually displaceable first and second connector conveyor elements 15, 17. Each connector conveyor element 15, 17 comprises a conveyor belt capable of bi-directional conveying.

The first and second connector conveyor elements 15, 17 are arranged in a loading configuration for loading items from the connector unit 5 to the item conveyor 3 in Figs. 1 and 2. With the illustrated arrangement, an item travelling from right to left, i.e. in a direction for loading items to the item conveyor 3, will engage the surface of the conveyor belt the item is transferred to, each time it is transferred from one conveyor element to another. This increases the reliability of the conveyor assembly 1.

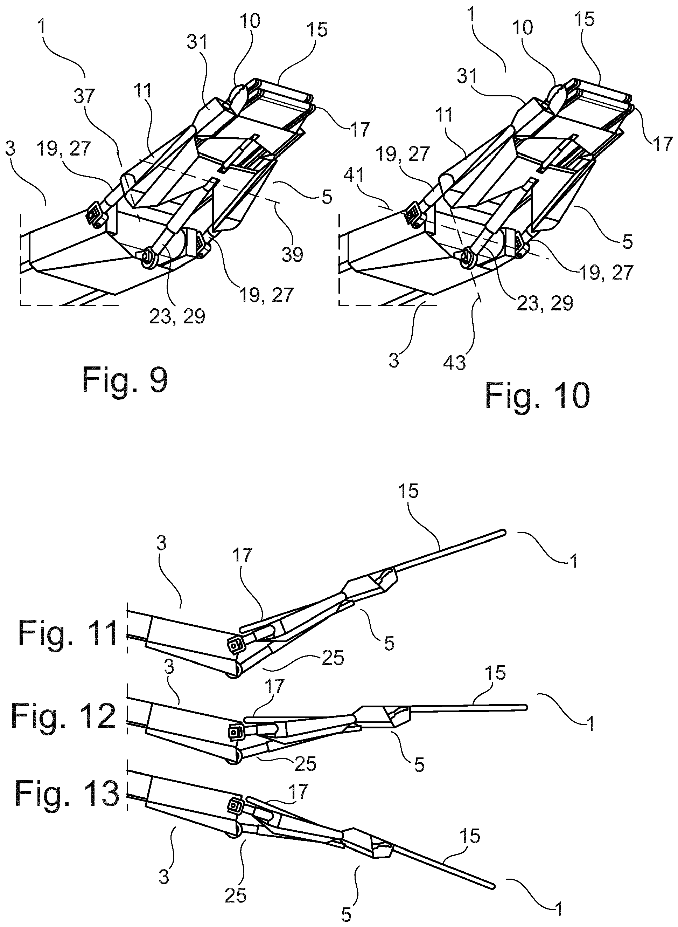

The connector unit 5 further comprises a rotation element 19 allowing rotation of the connector unit 5 around an axis of rotation 43, the axis of rotation 43 being illustrated in Fig. 10, relative to the item conveyor 3. It also comprises a tilting element 23 allowing tilting of the connector unit 5 relative to the item conveyor 3 around an axis of tilting 41 illustrated in Fig. 10, and a first conveyor assembly 25 forming part of the rotation element 19 and the tilting element 23.

In the embodiment of Fig. 1, the rotation element 19 comprises two linear actuators 27. The two linear actuators 27 rotate the connector unit 5 relative to the item conveyor 3 by each of them oppositely contracting and expanding. The tilting element 23 comprises a linear actuator 29, which is able to cause the connector unit 5 to tilt relative to the item conveyor 3 by expanding or extracting.

The conveyor assembly of Fig. 1 further comprises a supporting structure 31 supporting the first and second connector conveyor elements 15, 17. The supporting structure 31 comprises means for mutually displacing the first and second connector conveyor elements 15, 17. These means may, e.g., comprise drivable wheels engaging at least one side face of the elements 15, 17. The supporting structure 31 further comprises tilting supporting element 33 with a linear actuator 35 enabling tilting of the first and second connector conveyor elements 15, 17 relative to the intermediate structure 11 as illustrated in Figs 2, 6, 9 and 10.

The embodiment of Fig. 1 further comprises a control handle 10 for providing user input to the conveyor assembly 1 thereby rotating and/or tilting the connector unit 5 relative to the item conveyor 3.

Fig. 2 is a side view of the embodiment illustrated in Fig. 1.

In the embodiments of Figs. 3 and 4, the first and second connector conveyor elements 15, 17 are illustrated in a retracted state with a relatively short reach. In Fig. 5 the first and second connector conveyor elements 15, 17 are in an expanded state with a relatively long reach.

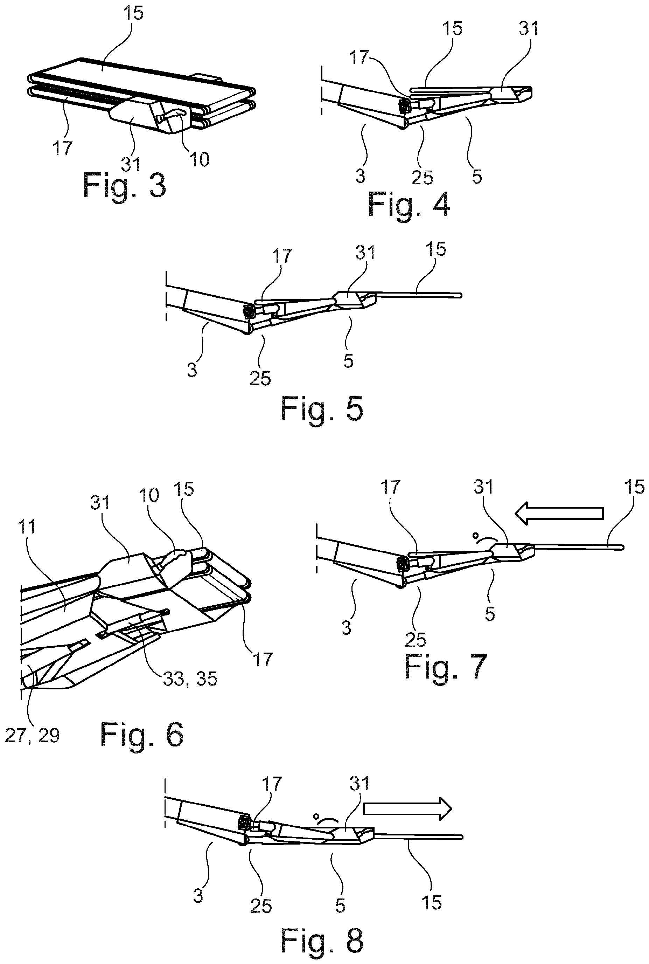

Fig. 6 illustrates an embodiment of the connector unit 5 viewed from underneath. In Fig. 6, the relative placement of the supporting structure 31, the tilting supporting structure 33, the intermediate structure 11 and the linear actuator 29 of the tilting element 23 is illustrated.

Fig. 7 illustrates an embodiment of the conveyor assembly 1 with the first and second connector conveyor elements 15, 17 in an expanded configuration optimised for loading of item from a cart or container onto the item conveyor 3. When items are conveyed from right to left, each time an item transfers from one conveyor belt to the next, the item is delivered to a conveyor belt with the adjacent end oriented below the conveyor aabelt it leaves. In Fig. 8, the first and second connector conveyor elements 15, 17 are in an unloading configuration for unloading items from the item conveyor 3 and onto a cart or into a container.

Fig. 9 illustrates an embodiment of the conveyor assembly 1. In Fig. 9, the dashed line 37 indicates an axis of rotation around which the intermediate structure 11 is allowed to rotate relative to the Ilinear actuators 27 of the rotation element 19. The dashed line 39 indicates a pivoting axis around which the intermediate structure 11 is allowed to pivot relative to the linear actuator 29 of the tilting element 23. In Fig. 10, the dashed line 43 indicates an axis of rotation around which the connector unit 5 is allowed to rotate relative to the item conveyor 3. The dashed line 41 indicates an axis of tilting around which the connector unit 5 is allowed to tilt relative to the item conveyor 3.

Figs. 11-13 illustrate an embodiment of the conveyor assembly 1, wherein the first and second connector conveyor elements 15, 17 of the connector unit 5 are arranged for loading items from a cart or container onto the item conveyor 3 with varying tilting degrees of connector unit 5.

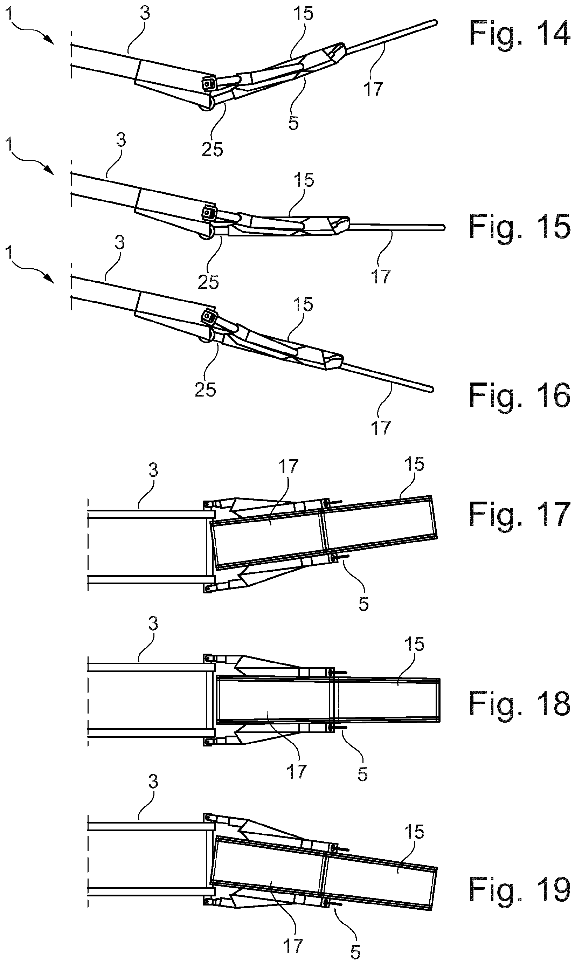

Similarly, Figs. 14-16 illustrate an embodiment of the conveyor assembly 1, wherein the first and second connector conveyor elements 15, 17 of the connector unit 5 are arranged for unloading items from the item conveyor 3 and onto a cart or into a container with varying tilting degrees of the connector unit 5.

Figs. 17-19 illustrate an embodiment of the coneyor assembly 1 with varying degrees of rotation of the connector unit 5 relative to the item conveyor 3.

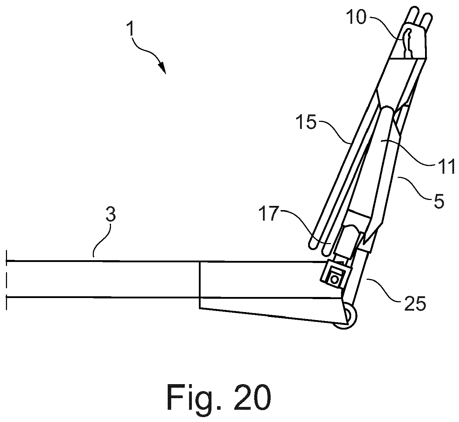

Fig. 20 illustrates the conveyor assembly 1 with the connector unit 5 in a strorage configuration for minimising the foot print of the conveyor assembly 1.

## Claims

1. A conveyor assembly comprising an item conveyor and a connector unit for loading of luggage or parcel items to the item conveyor or unloading of luggage or parcel items from the item conveyor, the connector unit defining a connector unit conveyor surface, the conveyor assembly further comprising:
- a rotation element for automated rotation of the connector unit relative to the item conveyor around an axis of rotation extending transversely to the connector unit conveyor surface;
- a tilting element for automated tilting of the connector unit relative to the item conveyor;
- at least one first actuator assembly connected to the connector unit and configured to at least effect automated rotation of the connector unit relative to the item conveyor around the axis of rotation; and
- a control unit for controlling the first actuator assembly.

2. A conveyor assembly according to claim 1, wherein the at least one first actuator assembly is configured to effect automated tilting of the connector unit relative to the item conveyor.

3. A conveyor assembly according to claim 1 or 2, wherein the first actuator assembly interconnects the item conveyor and the connector unit.

4. A conveyor assembly according to any of the preceding claims, wherein the rotation element comprises at least two linear actuators.

5. A conveyor assembly according to claim 4, wherein the linear actuators of the rotation element are attached to the item conveyor via joints allowing movement around a first axis oriented transverse to the conveying direction of the item conveyor, and around a second axis oriented perpendicular to the first axis.

6. A conveyor assembly according to any of the preceding claims, wherein the tilting element comprises at least one linear actuator.

7. A conveyor assembly according to any of the preceding claims, wherein the connector unit is connected to the item conveyor solely through the first actuator assembly.

8. A conveyor assembly according to any of the preceding claims, wherein the connector unit comprises:
- mutually displaceable first and second connector conveyor elements; and
- a supporting structure for supporting the first and second connector conveyor elements.

9. A conveyor assembly according to claim 8, wherein the first and second connector conveyor elements are controlled to selectively mutually displace on the basis of a conveying direction of the first and second connector conveyor elements.

10. A conveyor assembly according to claim 8 or 9, wherein the at least one first actuator assembly is attached to the supporting structure via an intermediate structure, the intermediate structure being attached to the supporting structure via joints allowing tilting of the supporting structure relative to the intermediate structure .

11. A conveyor assembly according to any of claims 10, wherein the supporting structure comprises a tilting supporting element allowing tilting of the first and second connector conveyor elements relative to the intermediate structure.

12. A method for loading of luggage or parcel items to an item conveyor or unloading of luggage or parcel items from the item conveyor, the method comprising the steps of:
- providing a conveyor assembly comprising an item conveyor and a connector unit defining a connector unit conveyor surface, the conveyor assembly further comprising:
∘ a rotation element for automated rotation of the connector unit relative to the item conveyor around an axis of rotation extending transversely to the connector unit conveyor surface;
∘ a tilting element for automated tilting of the connector unit relative to the item conveyor;
∘ at least one first actuator assembly connected to the connector unit and configured to at least effect automated rotation of the connector unit relative to the item conveyor around the axis of rotation; and
∘ a control unit for controlling the first actuator assembly
and
- conveying luggage or parcel items to an item conveyor via the connector unit or conveying luggage or parcel items from the item conveyor via the connector unit.

13. A method according to claim 12, wherein the conveyor assembly further comprises:
- mutually displaceable first and second connector conveyor elements; and
- a supporting structure for supporting the first and second connector conveyor elements,
and wherein the method comprises the further step of:
- selectively mutually displacing the first and second connector conveyor elements on the basis of a conveying direction of the first and second connector conveyor elements.

14. A method according to claim 13, wherein the conveyor assembly further comprises
- an intermediate structure attached to the at least one first actuator assembly and the supporting structure; and
- a tilting supporting element allowing tilting of the first and second connector conveyor elements relative to the intermediate structure,
and wherein the method comprises the further step of:
- selectively tilting the first and second connector conveyor elements relative to the intermediate structure on the basis of the conveying direction of the first and second connector conveyor elements.

15. A method according to claim 13 or 14, wherein the method comprises the further step of:
- selectively tilting the connector unit relative to the item conveyor on the basis of the conveying direction of the first and second connector conveyor elements.
